Europäisches Patentamt

European Patent Office

Office européen des brevets

(11) Publication number : **0 588 497 A1**

# (12) EUROPEAN PATENT APPLICATION

(21) Application number : **93306495.8**

(22) Date of filing : **18.08.93**

(51) Int. Cl.⁵ : **C01B 33/193**

(30) Priority : **19.08.92 EP 92307570**

(43) Date of publication of application :
**23.03.94 Bulletin 94/12**

(84) Designated Contracting States :
**AT BE CH DE DK ES FR GB GR IE IT LI NL PT SE**

(71) Applicant : **JOSEPH CROSFIELD & SONS LTD.**
**Bank Quay**
**Warrington, Cheshire, WA5 1AB (GB)**

(72) Inventor : **Cartwright, Simon, Unilever**
**Research Port**
**Sunlight Laboratory, Quarry Road East**
**Bebington, Wirral, Merseyside L63 3JW (GB)**
Inventor : **Ward, David Richard, Unilever**
**Research Port**
**Sunlight Laboratory, Quarry Road East**
**Bebington, Wirral, Merseyside L63 3JW (GB)**

(74) Representative : **Hugot, Alain et al**
**Unilever plc, Patent Division, Colworth House**
**Sharnbrook, Bedford MK44 1LQ (GB)**

(54) **Process for preparing precipitated silicas.**

(57) A heated sodium silicate solution is partially neutralised by a first acid addition, the slurry is then allowed to age and a second acid addition achieves the completion of the neutralisation of the heated sodium silicate solution. The slurry is then filtered, washed and dried.

EP 0 588 497 A1

FIELD OF INVENTION

The invention relates to a process for preparing precipitated silicas in a stirred vessel.

BACKGROUND TO THE INVENTION

Silicas gels, usually referred to as xerogels in the dried form, are versatile materials for industrial purposes and find uses, particularly in the milled and/or micronised state in which controlled particle size distributions can be produced, as a matting/flatting agent in paint and lacquers systems, as a toothpaste component, abrasive and/or rheological control agent, as an antiblocking agent in plastic films, and as a stabiliser for alcoholic beverages. The xerogel is obtained from the hydrogel which in turn is formed through a classical sol/gel transformation when an alkaline containing silica solution is acidified with either a mineral acid or carbon dioxide.

The hydrogel is purified by removal of electrolyte and then aged to enable higher porosity structures to be obtained on drying. The amount of ageing is dependent upon the end use of the milled/micronised xerogel product, for example, toothpaste abrasives require minimum ageing whereas a matting/flatting agent is most effective when the porosity is maximised through prolonged ageing, i.e. surface area in the range 250 to 450 $m^2/g$.

Of prime importance for a silica xerogel being groomed as a precursor to suitable products for the paint/lacquer and plastic industry is to obtain the optimum porosity (usually greater than 1.2 $cm^3/g$) without inherently weakening the structure. This is important in order to limit the amount of fine particles produced (below 2 $\mu$m) in the milling/micronising processes as excessive levels of fines can have a detrimental effect on the effectiveness and dispersibility of the micronised product.

The main cause of weakness in the structure of high porosity silica xerogels is the presence of wide pores (above 600 Å) and, traditionally, the only way to avoid the introduction of these wide pore systems is to age hydrogels produced from acid sols i.e. produced by reacting the alkaline containing silica solution with a level of acid in excess of that required to neutralise the metal oxide present. This process is both time consuming and at neutral pH can take up to 6 hours even at a temperature of 95°C. Lower surface area/higher porosity silica gel-types can be prepared by precipitation in stirred vessels under alkaline conditions at temperatures in excess of 80°C either with or without the presence of added electrolyte. But these materials are structurally weak, containing large levels of the wider pore system. The presence of the wide pore system (above 600 Å) also causes blue tone in clear lacquer systems, limiting the use of these products to pigment containing formulations.

DESCRIPTION OF THE PRIOR ART

US 3,716,493 and GB 1,219,877 describe a process for the preparation of an alkaline hydrogel, by reacting an aqueous alkali metal silicate solution with an aqueous acid controlling the pH 10.6 to 10.9, allowing the alkaline hydrogel to set before further agitating to obtain a slurry of finely divided particles of hydrogel, ageing the slurry after adjusting the pH with ammonia for at least 1.5 hours, washing with water and/or ammoniated water followed by rapid drying.

A main drawback of this process is that it is a very slow process.

It is well known, by US 3,652,215 - Aboutboul, to produce silica xerogels by neutralising sodium silicate with a strong acid, neutralisation being carried out in stoichiometric proportions under agitation, the $SiO_2$ concentration in the final slurry being between 5 and 12 % by weight, the temperature during precipitation being maintained between 0°C and 10°C, the final pH of the precipitate being preferably between 6 and 7. The neutralisation lasts around 2 hours. The precipitated silica hydrogel slurry is then heated at a temperature between 50°C and 100°C for a period of 1 to 6 hours, most preferably 4 hours.

The product is washed with salts so that the filtrate titrates less than 20 p.p.m. sodium concentration. The gel is comminuted by high shear mixing to obtain particles having a mean diameter of less than about 200 $\mu$m, preferably in the range of from 30 to 150 microns. The water is removed from the gel by use of a solvent, the gel is then dried and calcined at a temperature about 540°C.

A silica xerogel is obtained having a narrow pore diameter in the range of 300-600 Å and a surface area in the range of 200-500 $m^2/g$.

The main drawback of the process described in this document is that it is a very slow process since it requires a neutralisation which lasts 2 hours and a further heat treatment of about 4 hours. A second drawback is the need for solvent exchange before drying which is most probably due to a weak structure of silica which cannot be merely filtered and dried.

A first goal of the present invention is to provide a new quick process for preparing precipitated silicas which can then be directly filtered and dried enabling the production of silica having a determined pore volume in the range of 0.8 to 2.0 cm$^3$/g, a surface area of 200 to 500 m$^2$/g and a pore size distribution wherein less than 10% of the pores have a diameter above 600 Å.

A second goal of the present invention is to provide a new process for the preparation of silica used in wax coated silica matting agents which are widely used in the surface coating industry to reduce gloss wherein silica must have a high pore volume together with sufficient internal strength to enable the product to be milled without the production of excessive fines.

It has now been found that, by careful selection of precipitation conditions in the stirred vessel, it is possible to produce a silica gel-type through an alkaline sol/gel transformation which has a pore size distribution similar to that obtained through the traditional acid sol gel route. Moreover, it has been demonstrated that the micronised form of the so-called alkaline stirred gel is an excellent matting agent, fully equivalent to its counterparts either coated with wax or naked prepared through an aged acid sol gel route.

## SUMMARY OF THE INVENTION

The object of the present invention is to provide for a process for preparing precipitated silicas in a stirred vessel, comprising the following steps:

i- Reacting an alkali (M) containing silica solution, with a ratio $SiO_2$:$M_2O$ in the range from 2.5 to 3.5 and a $SiO_2$ concentration of from 4.5% to 6.5% by weight of the alkali containing silica solution, with a primary addition of an aqueous mineral acid having a concentration commensurate with obtaining, together with the volume of reactants, a degree of neutralisation of between 30% to 70%, preferably 45% to 55%, at a temperature of from 50°C to 85°C,

ii- Ageing the produced slurry for a period of from 5 to 40 minutes,

iii- Adding a secondary sufficient volume of aqueous mineral acid in order to achieve the neutralisation of the alkali containing silica solution,

iv- Filtering, washing and rapidly drying the product obtained.

The secondary acid addition may be carried out with a small excess of acid in order to bring the pH to about 3 and to prevent any further structural change.

Thus, it is possible to minimise the formation of wide pore systems (above 600 Å) enabling the product to have high pore volume without sacrifying particle strength. This is particularly important for the preparation of silica matting agents wherein the silica must have a high pore volume together with sufficient internal strength in order to minimise the formation of fines during the micronising step. Therefore, a product is obtained with optimum matting effectiveness. Moreover, owing to the absence of wide pore systems, the matting agent, when incorporated in clear lacquer systems, gives rise to a dried film which is totally transparent with no sign of opalescence commonly referred to as "blue tone".

## DEFINITIONS AND TEST PROCEDURES

i. Surface Area/Pore Volume

Surface area is determined by standard nitrogen adsorption methods of Brunauer, Emmett and Teller (BET) using a multi point method with an ASAP 2400 apparatus supplied by Micrometrics of the USA. The samples are outgassed under vacuum at 270°C for at least 1 hour before measurement. Surface area is calculated from the adsorption data measured in the P/Po range 0.05 to 0.3, and pore volume is calculated from the volume of nitrogen gas adsorbed at P/Po 0.98. This apparatus also provides the pore size distribution from which it is possible to get the pore size for which 10% of the pores are below this pore size (d10). In the same manner, it is also possible to get the pore size for which 50%, respectively 90%, of the pores are below this pore size (d50 respectively d90).

ii. Intraparticle Porosity (IP)

In some cases, pore volume has also been measured by mercury intrusion using a Micrometrics 9220 porosimeter. In this method the distinction between intra-particle porosity and inter-particle is made on the basis of the shape of the intrusion curve. The figures relating to Intraparticle Porosity therefore include an indication of the pore diameter which is selected as being the cut point between the two regions.

iii. Degree of neutralisation (DofN)

Knowing the quantity of sodium silicate which is to be neutralised it is possible to calculate the quantity of acid which is needed to complete the neutralisation. The degree of neutralisation must be understood as being the percentage of the required amount of acid which has been introduced at the end of the first step constituted by the partial neutralisation.

iv. Weight Mean Particle Size (WMPS)

The Weight mean particle size is determined with the aid of a Malvern Particle Size, Model 3600E. This instrument, made by Malvern Instruments, Malvern, Worcestershire, United Kingdom, uses the principle of Fraunhoffer diffraction utilising a low power He/Ne laser. Before measurement, the sample is dispersed ultrasonnicallly in water for a period of 7 minutes to form an aqueous suspension.

v. Matting efficiency

The matting efficiency of silica matting agent is determined by dispersing the silica in a alkyd urea lacquer, adding a catalyst, drawing a film on a black glass plate, curing in an oven and measuring the glossmeter readings using a BYK multi-glossmeter.

Formulations

a) Alkyd urea lacquer (35% solids)

| | Parts by weight |
|---|---|
| Butylated urea formaldehyde resin; BE660 (53%) | 40 |
| Castor oil modified alkyd of short to medium oil length BA548 (60%) | 30 |
| Xylene | 28 |
| Isopropyl alcohol | 14 |
| Silicone oil/type AL(Wacker) | 1.12 |

b) Acid catalyst

| | Parts by weight |
|---|---|
| Butyl alcohol | 87 |
| Concentrated sulphuric acid | 11 |
| Distilled water | 2 |

c) Test lacquer

| | Parts by weight |
|---|---|
| Alkyd urea lacquer (35%) | 100 |
| Acid catalyst | 5.2 |
| Silica matting agent | 1.46 |

The test lacquer contains 1.37% w/w of the silica matting agent.

Into a 250 ml beaker weigh 100g alkyd urea lacquer (formulation (a)). Using a Heidolph stirrer (fitted with a Cowles-type head) stir the lacquer at 1000 rpm and add 5g of the silica under test. When the silica completely wets out, increase the stirrer speeds to 3000 rpm (equivalent to a peripheral speed of 4.87 m/s) and stir for 10 minutes. Allow the dispersion to de-aerate, then weigh 6.5g into a clean beaker followed by 15 g of the alkyd urea lacquer (formulation (a)), and then hand stir in 1.1 g of the acid catalyst. Draw down a film onto a black glass plate (12" x 4") using a 100 $\mu$m block applicator, cure in an oven at 150°C for 10 minutes, allow the plates to cool and then measure the glossmeter reading at 60° and 85° using a BYK multi-glossmeter.

iv. Film clarity test

This test enables the clarity of a matting film to be assessed. A 10% acrylic lacquer is used as, on the one hand, this is considered a difficult medium for dispersing silicas, and, on the other hand, this is the most common clear lacquer system used in the paint industry.

Formulations

a) Acrylic lacquer (10% solids content)

|  | Parts by weight |
|---|---|
| Acrylic polymer DA100 | 120 |
| Butanone (ethyl methyl ketone) | 540 |
| 4-methyl Pentan-2-0ne (methyl iso-butyl ketone) | 540 |

The acrylic polymer is dissolved in the solvent mix by heating under reflux in a reaction vessel fitted with a stirred and a well cooled reflux condenser. A clear solution is obtained. The viscosity of the prepared lacquer at ambient temperature must be kept in the range 20 to 25 seconds on a No.4 Ford Cup.

b) Test lacquer

|  | Parts by weight |
|---|---|
| 10% acrylic lacquer | 100 |
| Test silica | 1.5 |

The test lacquer thus contains 1.48 % silica by weight.

Detailed test method

a) Weight 100 g of 10% acrylic lacquer into a 250 ml beaker.
b) Using a Heidolph stirrer (fitted with a Cowles type head) stir the lacquer at 750 rpm add 1.5 g of the silica under test, and wet out.
c) When the silica has wet out increase the stirrer speed to 1500 rpm (equivalent to a peripheral speed of 2.44 m/s).
d) Mix for 5 minutes and allow to de-aerate.
e) Pour the lacquer down a black glass plate (12" x 4") inclined at 45° ensuring that all lacquer and silica is removed from the beaker.
f) After allowing the plate to drain, place horizontally and allow to air dry.
g) When dry, observation of film shows either total transparency or blue opalescence commonly known as "blue tone".

DETAILED DESCRIPTION OF THE INVENTION

The invention is further illustrated but not limited by the following examples wherein percentages are in weight by volume, unless otherwise indicated. When the description refers to $SiO_2:M_2O$ ratio, M is an alkaline metal.

Example 1

In the experiments described in this Example 9.5% sulphuric acid was used for additions and the amount of sodium silicate was calculated to produce a target concentration of 5.8% $SiO_2$ at the end of the primary acid addition.

The first stage of the process involved the partial neutralisation of sodium silicate by the addition of sulphuric acid to a heated solution over a period of 20 minutes. A second twenty minute stage followed during which the silica was allowed to form naturally or, in some cases, sodium chloride was added. This was followed by a third twenty minute period during which the remaining acid required to complete neutralisation was added together with a small excess of acid to bring the solution to pH 3. The resultant material was then filtered washed and dried rapidly in a flash drier.

The apparatus used was a simple 5-litre baffled flange spherical pot fitted with reflux condenser and Heidolph stirrer. The internal diameter of the spherical pot was 23 cm with an upper circular opening having a diameter of 10cm. The pot was provided with four equally spaced vertical baffles 20 cm high and 2 cm wide.

The Heidolph stirrer had 6 angled blades and a radius of 4 cm, the stirring speed was 600 rounds per minute (i.e. tip speed of 2.5 m/s). It was placed 6 cm below the pool at beginning of experiment. The temperature was controlled throughout using an electric isomantle.

When salt was added during the ageing step it was added as a 200 g/l solution of sodium chloride. The amount was such that a 1:1 ratio of NaCl was achieved at the end of the addition. The effect of the degree of neutralisation between 30% and 70%, the temperature between 60°C and 100°C and salt addition have been examined.

Table 1 and 2 summarise the results.

## Table 1: preparation without sodium chloride addition

| Sample | DofN (%) | Temp. (°C) | IP cm3/g | Pore Volume cm3/g | Surface area (m2/g) |
|---|---|---|---|---|---|
| 1 | 30 | 60 | 0.62 | 1.04 | 659 |
| 2 | 30 | 80 | 1.48 | 1.57 | 443 |
| 3 * | 30 | 100 | 2.57 | 0.89 | 144 |
| 4 | 50 | 80 | 1.74 | 1.78 | 414 |
| 5 | 50 | 100 | 2.61 | 2.09 | 253 |
| 6 | 70 | 100 | 2.22 | 1.94 | 205 |

## Table 2: preparation with salt addition

| Sample | DofN (%) | Temp. (°C) | IP cm3/g | Pore Volume cm3/g | Surface area (m2/g) |
|---|---|---|---|---|---|
| 7 * | 30 | 60 | 2.30 | 1.28 | 506 |
| 8 * | 30 | 80 | 2.19 | 1.20 | 358 |
| 9 | 30 | 100 | 3.10 | 0.44 | 87 |
| 10* | 40 | 80 | 2.74 | 1.68 | 328 |
| 11 | 40 | 100 | 3.19 | 1.37 | 161 |
| 12* | 50 | 60 | 1.88 | 2.07 | 464 |
| 13* | 50 | 80 | 1.96 | 1.90 | 320 |
| 14 | 50 | 100 | 3.15 | 1.51 | 191 |
| 15 | 70 | 100 | 2.96 | 1.99 | 162 |

* indicates that the intraparticle porosity is taken as pores less than 1 µm. In all other cases the intraparticle porosity is assigned to pores less than 7 µm.

Example 2

In this example, all experiments have been carried out at 80°C, without salt and with a Degree of Neutralisation of 50% at the end of the primary addition of acid. The parameter varied was silica concentration.

The general preparative route is a three stage process:

Stage 1: Partial neutralisation of heated sodium silicate solution by addition of sulphuric acid (20 minutes).

Stage 2: Ageing step in which silica is allowed to form (20 minutes).

Stage 3: Addition of remaining acid to complete neutralisation with a small excess to bring the solution to pH 3 (20 minutes).

The apparatus used was a simple baffled 5-litre pot fitted with reflux condenser and Heidolph stirrer. The temperature was controlled using an electric isomantle. In all experiments sodium silicate containing 16.61% by weight $SiO_2$ and 9.5% sulphuric acid were used.

The resultant material was then filtered/washed and dried rapidly using a flash drier.

Table 3 shows the effect of $SiO_2$ concentration.

Table 3: Effect of $SIO_2$ concentration

| $SiO_2$ | Pore | Surface | Pore | size | distribution |
|---|---|---|---|---|---|
| | Volume | Area | d10 | d50 | d90 |
| (%) | (cm3/g) | (m2/g) | | (Å) | |
| 5.8 | 1.86 | 423 | 110 | 310 | 580 |
| 6.2 | 2.00 | 400 | 130 | 420 | 800 |
| 6.5 | 2.14 | 393 | 190 | 550 | 1000 |
| 6.7 | 2.11 | 395 | 190 | 540 | 950 |
| 7.0 | 2.34 | 391 | 210 | 570 | 1000 |
| 7.2 | 2.00 | 373 | 190 | 600 | 1000 |

As the silica concentration increases, the structure becomes more open. In the last sample ($SiO_2$ concentration : 7.2%) the nitrogen adsorption data indicated that the pore size distribution was becoming so broad that all of the pores were not within the measuring range of the technique (i.e. > 1000 Å).

Example 3:

In the following experiments the same apparatus and the same stages have been used as in example 2 except that:
- $SiO_2$ concentration is 5.8%,
- Secondary acid addition time rate has been altered.

The results are shown in Table 4.

Table 4: influence of secondary acid addition time rate

| Acid | Pore | Surface | Pore | size | distribution |
|---|---|---|---|---|---|
| addition | Volume | Area | d10 | d50 | d90 |
| time rate | | | | | |
| (minutes) | (cm3/g) | (m2/g) | | (Å) | |
| 20 | 1.86 | 423 | 110 | 310 | 580 |
| 15 | 1.81 | 438 | 110 | 310 | 600 |
| 10 | 1.74 | 454 | 105 | 300 | 590 |
| 5 | 1.77 | 452 | 105 | 300 | 550 |

It is obvious that secondary acid addition time rate has little importance as the differences are not significant.

Example 4:

In the following experiments, conditions are the same as in Example 2 but:
- $SiO_2$ Concentration is 5.8%,
- The primary acid addition time rate has been altered.
The results are shown in Table 5.

Table 5: influence of primary acid addition time rate.

| Acid | Pore | Surface | Pore | size | distribution |
|---|---|---|---|---|---|
| addition | volume | area | d10 | d50 | d90 |
| time rate | | | | | |
| (minutes) | (cm3/g) | (m2/g) | | (Å) | |
| 20 | 1.84 | 423 | 110 | 310 | 580 |
| 15 | 1.74 | 440 | 105 | 270 | 450 |
| 10 | 1.77 | 459 | 105 | 260 | 550 |

The primary acid addition time rate has little effect on the resultant silica except for a slight decrease in mean pore diameter with shorter time.

Example 5:

Table 6 shows the influence of the ageing time on the silica structure using the process described in Example 2.

Table 6: Influence of ageing time.

| Ageing time | Pore | Surface | Pore | size | distribution |
|---|---|---|---|---|---|
| | volume | area | d10 | d50 | d90 |
| (minutes) | (cm3/g) | (m2/g) | | (Å) | |
| 30 | 1.98 | 413 | 110 | 360 | 620 |
| 20 | 1.86 | 423 | 110 | 310 | 580 |
| 10 | 1.67 | 464 | 80 | 250 | 400 |

The pore volume increases and the surface area decreases as the ageing time increases.

The above examples show that the process parameters of temperature, silica concentration and ageing time have significant effects on the final structure generated by the process of the invention.

Example 6:

In the following experiments, preparations were carried out using a 250 litre baffled heated stirred reaction vessel. The reaction vessel was designed according to specifications as listed in Chemineer Inc., Chem. Eng., April 26 pages 101-110. Whilst the turbine is optional to the mixing geometry, a 6-bladed 30° pitched bladed unit has been chosen for the experiments.

34 litres of 9.5% sulphuric acid, corresponding to a DofN of 50%, were added over 20 minutes to a pool of 73 litres of sodium silicate, containing 16.61% by weight $SiO_2$, and 135 litres of water at 80°C. This was followed by a 20-minute ageing and the remaining acid was added over 20 minutes. The pool was maintained at a temperature of 80°C.

The resultant product was then filtered and washed on a filter press and flash dried. It gave a silica having a BET surface area of 433 m2/g, a pore volume of 1.67 cm3/g and a Na2O residual level of 2,227 ppm.

The product was then micronised using a AFG200 air microniser. The average particle size was 7.14 $\mu$m. The matting performance was measured using the above described method. The light reflected at 60° was 15% and the light reflected at 85° was 29%. Thus the matting performance is excellent.

Other similar tests, using the same starting solution and the same primary and secondary acid additions were carried out using different temperatures and ageing times. The results of all these tests are summarised in the following table in which, the pore volume (PV), the surface area (SA), the pore size distribution (d10, d50, d90), the Weight Mean Particle Size (WMPS), and the light reflected at 60° and 85° are indicated. None of the derived micronised products exhibited "blue tone" in the dried acrylic lacquer film.

EP 0 588 497 A1

| Temp (°C) | Age Time (mins) | PV cm³/g | SA m²/g | Pore Size Distribution (Å) | | | WMPS (µm) | 60° (%) | 85° (%) |
|---|---|---|---|---|---|---|---|---|---|
| | | | | d10 | d50 | d90 | | | |
| 65 | 15 | 1.30 | 487 | 60 | 140 | 290 | 5.9 | 20 | 40 |
| 65 | 19 | 1.27 | 506 | 60 | 150 | 280 | 6.0 | 22 | 43 |
| 65 | 21 | 1.21 | 557 | 45 | 110 | 280 | 4.8 | 25 | 59 |
| 70 | 15 | 1.33 | 489 | 60 | 140 | 280 | 5.9 | 17 | 34 |
| 70 | 17 | 1.36 | 492 | 65 | 180 | 290 | 5.9 | 20 | 43 |
| 70 | 19 | 1.42 | 498 | 70 | 180 | 320 | 6.1 | 16 | 30 |
| 75 | 13 | 1.36 | 421 | 70 | 200 | 400 | 6.2 | 17 | 35 |
| 75 | 15 | 1.37 | 444 | 75 | 190 | 350 | 5.9 | 20 | 43 |
| 75 | 17 | 1.43 | 447 | 75 | 200 | 350 | 5.9 | 17 | 36 |
| 80 | 15 | 1.54 | 390 | 100 | 270 | 600 | 6.1 | 19 | 42 |
| 80 | 20 | 1.67 | 433 | 95 | 290 | 500 | 7.1 | 15 | 29 |
| 85 | 13 | 1.54 | 387 | 105 | 250 | 450 | 6.0 | 18 | 40 |
| 85 | 17 | 1.62 | 403 | 105 | 270 | 460 | 6.0 | 17 | 38 |

10

**Claims**

**1-** Process for preparing precipitated silicas in a stirred vessel, comprising the following steps:

i- Reacting an alkali (M) containing silica solution, with a ratio $SiO_2$:$M_2O$ in the range from 2.5 to 3.5 and a $SiO_2$ concentration of from 4.5% to 6.5% by weight of the alkali containing silica solution, with a primary addition of an aqueous mineral acid having a concentration commensurate with obtaining, together with the volume of reactants, a degree of neutralisation of between 30% to 70% at a temperature of from 50°C to 85°C,

ii- Ageing the produced slurry for a period of from 5 to 40 minutes,

iii- Adding a secondary volume of aqueous mineral acid to achieve the neutralisation of the alkali containing silica solution,

iv- Filtering, washing and rapidly drying the product obtained.

**2-** Process according to claim 1 wherein the secondary acid addition is carried out together with a small excess of acid to bring the solution to about pH 3.

**3-** Process according to claim 1 wherein sodium chloride is added to the solution during the ageing step.

**4-** Process according to claim 2 wherein the degree of neutralisation achieved at the end of the primary acid addition is between 45% and 55%.

**5-** Process according to claim 4 wherein the temperature of the solution is maintained between 60°C and 80°C.

European Patent
Office

**EUROPEAN SEARCH REPORT**

Application Number

EP 93 30 6495

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DATABASE WPIL<br>Week 8521,<br>Derwent Publications Ltd., London, GB;<br>AN 85-126549<br>& JP-A-60 065 713 (OJI PAPER KK)<br>* abstract * | 1 | C01B33/193 |
| A | EP-A-0 396 450 (RHONE POULENC CHIMIE)<br>* page 3, line 41 - page 4, line 27 * | 1 | |
| A | EP-A-0 157 703 (RHONE-POULENC CHIMIE DE BASE)<br>* claim 1 * | 1 | |
| A | EP-A-0 341 383 (DEGUSSA AG)<br>* claim 1 * | 1 | |
| A | GB-A-1 416 139 (UNILEVER LIMITED)<br>* claim 3 * | 1 | |
| A | GB-A-2 169 129 (PPG INDUSTRIES INC)<br>* page 1, line 64 - page 3, line 14 * | 1 | TECHNICAL FIELDS SEARCHED (Int. Cl.5) |
| A | US-A-4 243 428 (DONNET ET AL)<br>* claim 1 * | 1 | C01B |

-----

The present search report has been drawn up for all claims

| Place of search | Date of completion of the search | Examiner |
|---|---|---|
| BERLIN | 08 DECEMBER 1993 | CLEMENT J-P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P0401)